# EUROPEAN PATENT SPECIFICATION

(11) **EP 2 437 441 B1**
(45) Date of publication and mention of the grant of the patent: **25.09.2013**
(21) Application number: 10290521.3
(22) Date of filing: 30.09.2010
(51) Int. Cl.: H04L 12/721, H04L 12/709, H04L 12/803, H04L 12/725, H04L 12/717

(54) **A method for generating a look-up table for retrieving data rates for a data transmission connection**
Ein Verfahren zum Erzeugen einer Lookup-Tabelle für das Abrufen von Datenraten für eine Datenübertragungsverbindung
Procédé pour générer une table pour la récupération des débits de données pour une connexion de transmission de données

(43) Date of publication of application: 04.04.2012
(73) Proprietor: Alcatel Lucent, 75007 Paris (FR)
(72) Inventor: Rival, Olivier, 92340 Bourg la Reine (FR); Morea, Annalisa, 91140 Villebon sur Yvettes (FR)
(74) Representative: Mildner, Volker

(56) References cited:
- US-A1- 2003 223 424
- US-A1- 2004 029 553
- US-A1- 2004 258 064
- US-A1- 2009 296 704

## Description

### Field of the invention

The invention relates to a method of data transmission in a telecommunications network.

### Background

In a telecommunication network, network nodes are connected between each other by physical connections called links. A node may be connected to multiple other nodes by respective links. For transmitting data traffic from a starting node to an ending node, the data traffic may have to be switched by intermediate nodes along a transmission path connecting the starting and the ending node. In particular, data traffic may be transmitted in optical networks between network nodes by means of optical signals transmitted via optical links, such as optical fibers. Data traffic is transmitted from the starting node to the ending node via a transmission connection along a transmission path between these two nodes. The transmission connection is established, by configuring the nodes forming the transmission path such, that they transmit data between the source and the destination nodes along this path.

When establishing different data transmission connections with respective assigned data rates within a telecommunications network, it is an aim to use an overall optimized number of network resources for these data transmission connections. A first type of network resources is the number of nodes that are needed to establish a data connection, a second type of resources is the number of transponders needed to perform an optical-electrical-optical (OEO) conversion of an optical transmission signal for signal regeneration, a third type of network resources is the number of wavelengths needed in an optical Wavelength Division Multiplex System for transmitting data at a certain rate. It is a well known approach to first specify all the different to be established data transmission connections by their starting and their ending edge nodes, and then to determine optimized network resources necessary for the different data transmission connections, by using an algorithm known as Linear Integer Programming. Such a determination requires many computational steps and is therefore time consuming.

Furthermore, for achieving an optimized number of necessary network resources, it is for telecommunication networks often necessary to establish a desired data transmission connection not as one single data transmission connection, but as a set of partial data transmission connections with respective assigned partial data rates, wherein the sum of these partial data rates is equal to or higher than the data rate of the desired data transmission connection.

Partial data transmission connections have all the same starting and ending edge node as the desired transmission connection and operate in parallel, such that the sum of the data rates of the partial data transmission connections is equal to or greater than the data rate of the desired transmission connection.

This makes the determination of optimized network resources even more complex resulting in a higher computational effort to be performed. Even furthermore, in the case that a new, additional data transmission connection shall be established, a new optimization of the network resources necessary for all data transmission connections has to be performed, by running the Linear Integer Programming algorithm over again, resulting in further time consuming computational effort. Such a new optimization may require a change of already existing data transmission connections, requiring a large amount of reconfiguration in the network.

Instead of optimizing the use of network resources for the different data transmission connections all together at once via the Linear Integer Programming algorithm, another approach is to optimize the use of network resources individually for each data transmission connection. An optimization may be carried out, by at first minimizing a number of transponders necessary for a set of partial data transmission connections forming the data transmission connection, and by then minimizing the number of wavelengths used for the set of partial data transmission connections. Such an achieved optimized number of used network resources might not be as optimal as the number of network resources determined by the Linear Integer Programming algorithm, but still this approach usually achieves a satisfying result. Also for this approach, the optimization usually requires to establish a data transmission connection via partial data transmission connections. Once a number of data transmission connections has already been determined and established, it is still necessary to determine upon receiving a request for a new demanded and additional data transmission connection new partial data transmission connections using optimized resources via an algorithm. This requires a certain computational effort and a certain amount of time for carrying out the optimization algorithm after receiving a request for the new data transmission connection.

The document US2004/0029553 A1 discloses an ad-hoc network for mobile communication, wherein after a reception of a request for data transmission connection partial data transmission connections are determined and then ranked in a table according to their metric.

The document US2003/0223424 A1 discloses a multipath processing architecture that allows multipath packets to be distributed across multi panel paths using a patch function and a modulo arithmetic based mapping function.

The document US2009/029670 A1 discloses a method for a multipath source routing in sensor network.

The document US2004/0258064 A1 discloses a routing scheme for a communication network, wherein in one scheme, destination terminals and associated neighbouring terminals are listed in routing control cache at each communication terminal in the network, and the packets are routed towards the destination terminal through the associated neighbouring terminals.

### Summary

As it has been described above, it is an approach to determine a set of partial data transmission connections having corresponding partial data rates for a specific data transmission connection with a specific assigned data rate between two specific network edge nodes, such that the sum of the corresponding set of partial data rates is equal to or higher than the specific data rate, and such that an optimized number of network resources is used for this specific data transmission connection.

The inventors of this patent application have discovered, that for telecommunication networks, a particular set of partial data rates determined for one specific data transmission connection between two specific network edge nodes achieves an optimized number of used network resources also, when this same set of data rates is reused for another data transmission connection between other network edge nodes, whose distance to each other is the same as or similar to that of the previously considered specific network edge nodes. In other words, when trying to find different sets of partial data transmission connections with a corresponding set of partial data rates between different network edge nodes using optimized network resources, there is a great correlation between the distances of the network edge nodes and the combinations of data rates of the resulting sets of data rates.

Considering the above described observations, it is proposed a data base system for providing a look-up table. The look-up table is storage device of the data base system. The look-up table indicates for a data rate and a transmission distance parameter a set of data rates. The look-up table contains at least one row or column, that indicates for a data rate and a transmission distance parameter a set of data rates. The look-up table may contain multiple rows or columns, wherein each row or column indicates a set of data rates for a given combination of a data rate and a transmission distance parameter.

A set of data rates may then be used at a later point of time for establishing partial data transmission connections forming between network nodes, whose transmission distance is equal to the transmission distance parameter, a requested data transmission connection having a same data rate, such that the network resources of the established partial data transmission connections are optimized. The look-up table is a preconfigured table, in the sense that the data it contains is defined before the request for the data transmission connection is received.

The data base system contains also a data-interface that is able to receive the request indicating a data rate and a transmission distance parameter. The data interface is also able to indicate a set of rates corresponding to the indicated data rate and the indicated transmission distance parameter.

A possible concrete implementation of the look-up table is a data structure that is stored in a memory device. The data structure has a number of structural entries, wherein each entry associates a set of data rates to a data rate and a transmission distance parameter. An alternative concrete implementation of the look-up table is software code or a software program, which contains instructions that determine for a given data rate and a given transmission distance parameter a set of data rates.

The generation of the set of data rates is performed, by determining for at least one test data transmission connection, having a test data rate equal to the data rate and a test transmission distance parameter equal to the transmission distance parameter, a test set of data rates, for which a number of necessary network resources is optimized. The set of data rates is determined based on the test set of data rates.

The test connections can be selected upfront, such that the sets of data rates are generated also upfront when the network is initialized. It is also possible, that when use is already made of the look-up table during operation of the network, a new data connection leading to new sets of data rates is considered and established on-line during operation mode, and the look-up table is updated using the distance parameter, the data rate and the set of data rates of the new data connection. This is equivalent to a self-learning system.

As a second exemplary device making use of the proposed look-up table, a network management system device for controlling network node devices of a telecommunications network is proposed.

As a third exemplary device making use of the proposed look-up table, a graphical user interface for retrieving for a data transmission connection a set of data rates is proposed.

Furthermore proposed is a method of retrieving a set of data rates from the proposed look-up table.

A transmission distance parameter either specifies either a distance between network nodes without a unit or a physical transmission distance between network nodes with a unit.

### Brief description of the drawings

Figure 1a shows a schematic diagram of a telecommunications network containing different network nodes together with a test data transmission connection, according to a first embodiment.
Figure 1b shows a schematic diagram of a look-up table generated based on the test data transmission connection, according to the first embodiment.
Figure 2 shows the schematic diagram of the telecommunications network and a data transmission connection, which is determined based on a use of the proposed look-up table for retrieving a set of data rates, according to a second embodiment.
Figure 3 shows a flow chart of preferred steps of a method of retrieving the set of data rates from the look-up table, according to the second embodiment.
Figure 4 shows a flow chart of further preferred steps of a method of retrieving the set of data rates from the look-up table, according to the second embodiment.
Figure 5 shows a block diagram of a network management device as a seond device making use of the proposed look-up table, according to a third embodiment.
Figure 6 shows a block diagram of a graphical user interface as a third device making use of the proposed look-up table, according to a fourth embodiment.
Figure 7 shows a block diagram of a data base system as a first device making use of the proposed look-up table, according to a fifth embodiment.

### Description of embodiments

### First embodiment

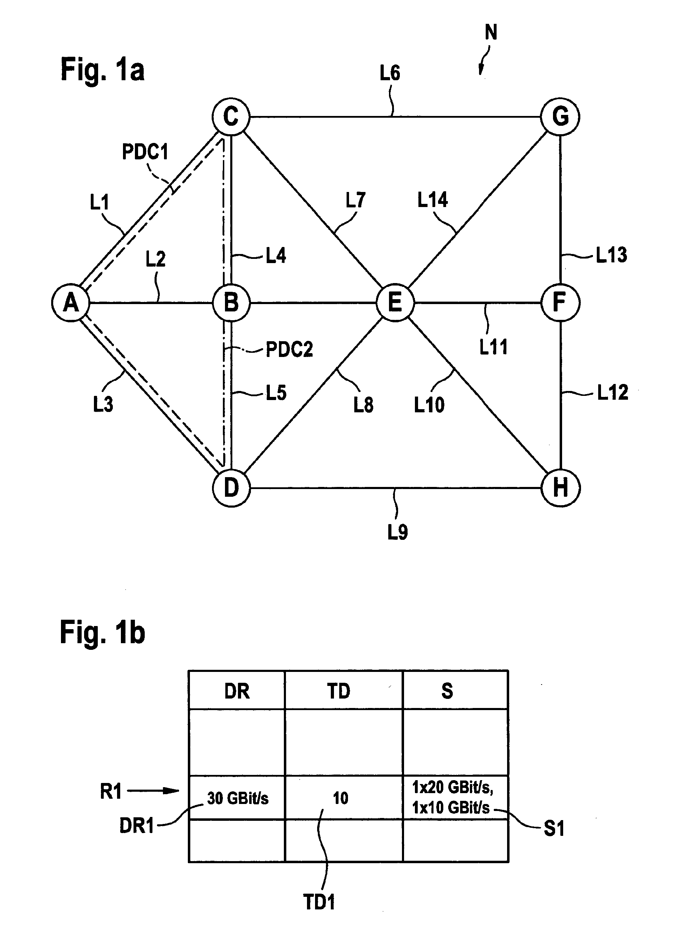

A method of generating a look-up table is now described exemplarily with reference to the Figures 1 a and 1 b. Figure 1 a shows a telecommunications network N, e.g. an SDH (Synchronous Digital Hierarchy) network or a SONET (Synchronous Optical Network), N with different network nodes A, B, ..., H connected via different links L1, L2, ..., L12. At first, for a test data transmission connection between the network nodes C and D with a test data rate of 30 GigaBit/s, a set of partial data transmission connections is determined, such that a number of network resources is optimized, resulting in a corresponding set of partial data rates to be used for transmission. This optimization may be carried out as proposed in the paper "A.Morea et al, Advantages of Elasticity versus Fixed Data-rate Schemes for Restorable Optical Networks, 36th European Conference and Exhibition on Optical Communication, 2010", for example by minimizing at first a number of transponders necessary for a set of partial data transmission connections forming the data transmission connection, and by then minimizing the number of wavelengths used for the set of partial data transmission connections. This optimization can be carried out on a computing device that has the necessary network topology information about the telecommunications network at hand. For example, this optimization is carried out on a network management device.

For the given example shown in Figure 1a, this results in a partial data transmission connection PDC1 with a partial data rate of 20 GigBit/s via a path given by the links L1, L3 along the network nodes C-A-D, and a partial data transmission connection PDC2 with a partial data rate of 10 GigBit/s via a path given by the links L4, L5 along the network nodes C-B-D.

A test transmission distance parameter indicating the shortest distance between the nodes C and D in the network is either provided or determined by a shortest path algorithm using transmission distance parameters associated with the links L1, ..., L12 of the network. For the given example, the shortest distance between the nodes C and D is given by the links L4 and L5 resulting an overall test transmission distance parameter of 10. A transmission distance parameter is in this example provided without a unit specifying the distance. A transmission distance parameter may be provided together with a unit such as kilometres specifying a physical transmission distance between network nodes. The nodes C and D have been selected as nodes of a test connection, and a data rate has been selected. The result of the optimization is a set of data rates. The distance parameter indicating the distance between the nodes C and D, the selected data rate and the resulting set of data rates are then entered into the look-up table.

The selection of other nodes for other test connections a may be done at the initialization of the network. Optimization of network resourcesis then be carried out for each test connection in combination with a selected data rate. The resulting sets of data rates together with the corresponding distance parameter and the selected data rate are then entered into the look-up table.

Figure 1b shows a schematic diagram of a visualization of a look-up table content, which could in this form be visible on a computer monitor, but which could be implemented in different ways, e.g. by a software program intrinsic or stored in a memory with specific addresses accessible/addressable by an operation software or devices such as Digital Signal Processor, a Filed Programmable Gate Array or an Application Specific Integrated Circuit.

The content of the look-up table is equal to an association of a data rate together with a transmission distance to a set of data rates.

The look-up table LUT, as shown in Figure 1 has at least one row R1 as well as a column DR indicating a data rate, a column TD indicating a transmission distance and a column S indicating a set of data rates. Into the row R1, the test data rate of 30 GBit/s is entered as an entry DR1 in the column DR, the test transmission distance parameter of 10 is entered as an entry TD1 in the column TD and the determined test set of data rates of S1={1 x 20 GBit/s , 1 x 10 GBit/s} is entered into the column S. The look-up table LUT is generated and later on stored in a storing device or provided in software code as previously described.

To summarize, a specific test data rate of 30 GBit/s is specified, while a specific test transmission distance parameter is implicitly defined by the network edge nodes C and D of the test data transmission connection, due to the properties of the network N shown in Figure 1 a. Thus, a set S1 of partial data rates is determined and entered into the table LUT of Figure 1b together with the requested test data rate DR1 of 30 GBit/s and the implicitly defined transmission distance TD1 of the value 10. Alternatively, in a first step, a table having a row with a specific data rate and a specific transmission distance parameter may be provided, in a second step a set of network nodes may be determined having a transmission distance parameter equal to the provided transmission distance parameter, in a third step a set of partial data rates to be used for partial data transmission connections using an optimized number of network resources may be determined as previously described, while in a fourth step the determined set is then entered into the table.

According to the first embodiment for generating the look-up table LUT, a single set of partial data rates of a single corresponding set of partial data transmission connections, using an optimized number of network resources between two specific network nodes, is determined for one specific data rate and one specific transmission distance parameter.

Alternatively, for different test data transmission connections, having a same data rate but different starting and ending network nodes with a transmission distance equal to a same transmission distance parameter, different sets of partial data rates may be determined as previously described. For each test data transmission connection the number of used network resources is optimized individually. The set of partial data rates, which is then entered into the look-up table for the specific data rate and the specific transmission distance parameter, is then be chosen from the different determined sets of partial data rates, for example by choosing that set of partial data rates, whose combination of data rates occurs most often in the determined sets of partial data rates. By this, it is achieved, that an optimization of network resources is based not only on one single test data transmission connection, but on multiple test data transmission connections, thus relying on a more representative amount of network properties of the network, and thus leading to an improved optimization result.

According to an even further alternative, for different test data transmission connections, having a same data rate, between different network nodes, having transmission distances of a same transmission distance parameter, different sets of partial data rates may be determined, wherein the overall number of network resources used by all test data transmission connections is optimized via an Integer Linear Programming algorithm. The set of partial data rates, which is then entered into the look-up table for the specific data rate and the specific distance parameter, may then be chosen from the different determined sets of partial data rates, for example by choosing that set of partial data rates, whose combination of data rates occurs most often in the determined sets of partial data rates. By this, it is achieved, that an optimization of network resources is based not only on one single test data transmission connection, but on multiple test data transmission connections, while also the step of optimization optimizes not only the individual number of network resources for each individual test data transmission connection, but the overall number of network resources, thus leading to an even more improved optimization result.

To summarize the different alternatives for generating the look-up table, it is to be said that a set of data rates indicated by the look-up table is based on at least one determined test set of data rates.

### Second embodiment

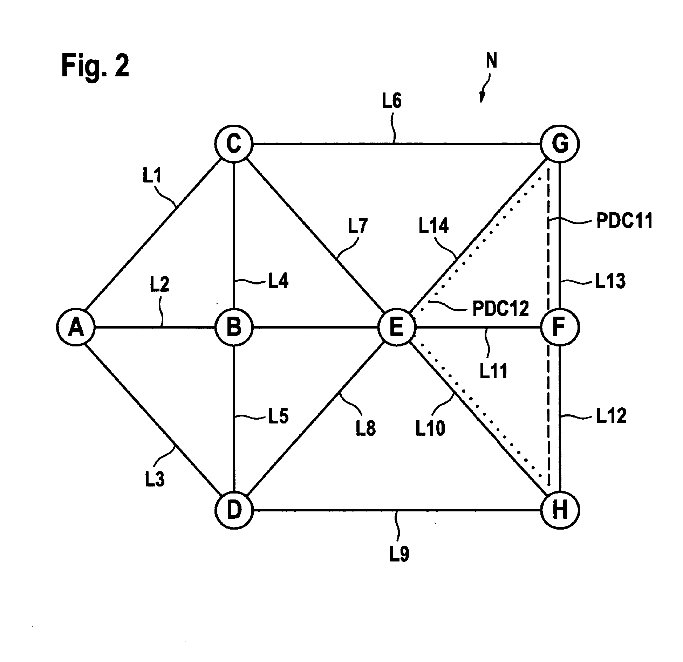

A method of retrieving a set of data rates for a desired data transmission connection is now described exemplarily with reference to Figure 2. The method of retrieving makes use of a look-up table as described with reference to Figure 1, while the generation of the look-up table could be according to the first embodiment or independent thereof.

Figure 2 shows the same network N as Figure 1 together with the different network nodes A, B, ..., H connected via the different links L1, L2, ..., L12. A request for a new desired data transmission connection between the nodes G and H, different to the nodes C and D of the test data transmission connection, is received. The request may be initiated by a network manager. The request contains a desired data rate, the starting edge node G and the ending edge node H. The desired data rate is equal to the test data rate of 30 GBit/s. The desired transmission distance parameter between the nodes G and H is in this example of the value 10, and therefore equal to the test data transmission parameter of the test data transmission connection. The desired transmission distance parameter specifying the distance between the nodes G and H is determined, by finding a shortest path between the nodes G and H and the overall transmission distance parameter of the determined path, using a shortest path algorithm. In this example, the shortest path between the node G and H is the path given by the links L12, L13 along the nodes G-F-H. In order to find a new set of partial data rates for new partial data transmission connections forming the desired data transmission connection between the nodes G and H, such that a number of network resources used by these partial data transmission connections is optimized, use is made of the look-up table LUT shown in Figure 1 b. Using the value of the desired data rate of 30 GBit/s and the value of the desired transmission distance parameter of the value 10, the set S1={1 x 20 GBit/s, 1 x 10 GBit/s} of partial data rates is retrieved from the table LUT.

The method of retrieving the new set of partial data rates for the desired new data transmission connection from the look-up table has clear advantages:
- the new set of partial data rates can be used for corresponding partial data transmission connections that rely on an optimized number of network resources, and
- this new set of partial data rates leading to an optimized use of network resources can be determined even before the request for the new desired data transmission connection is received, therefore requiring no great computational effort for finding the new set of partial data rates after receiving the request for the new data transmission connection.

To summarize the above: In order to determine partial data rates for corresponding partial data transmission connections using optimized resources, all that has to be performed, is to determine in advance for combinations of different data rates and different data transmission distances corresponding sets of partial data rates. This can be performed offline in advance, thus having sufficient time for computational efforts. The different data rates, data transmission distances and determined sets of partial data rates are then stored in the look-up table. Once a request for a desired data transmission connection, having a desired data rate between two desired network edge nodes, is received, all that has to be known is the desired data rate and the transmission parameter distance of the transmission distance between the desired network edge nodes, for retrieving the appropriate set of partial data rates from the look-up table.

The proposed method relies on retrieving from a look-up table an adequate pre-stored set of data rates leading to partial data transmission connections with optimized resources, instead of calculating for each new connection a new set of data rates. Thus, the determination of the set of data rates and the establishment of partial data connections with partial data rates equal to the set of data rates can be carried out much faster than the previously known solutions.

Coming back to Figure 2, it has been previously described that for the desired new data transmission connection between the nodes G and H a set of partial data rates S1 can be retrieved from the look-up table LUT shown in Figure 1 b. Using this retrieved set of partial data rates, a corresponding set of partial data transmission connections, forming the desired data transmission connection, is established. Using the known algorithm Open Shortest Path First (OSPF), which takes into account a present occupation of resources within the network, a partial data transmission path for a partial data transmission connection with a partial data rate of 20 GigBit/s is determined between the nodes G and H, resulting in this example in the partial data transmission connection PDC11 via the path given by the links L13, L12 along the nodes G-F-H. Furthermore, using the OSPF algorithm, a partial data transmission path for a partial data transmission connection with a partial data rate of 10 Gig/s is determined between the nodes G and H, resulting in this example in the partial data transmission connection PDC12 via the path given by the links L14, L10 along the nodes G-E-H.

As it has been explained previously above, the new partial data transmission connections PDC11, PDC12 use an optimized number of network resources, since their corresponding data rates are equal to the data rates of the previously determined set of data rates S1, and since the transmission distance parameter of the distance between the nodes G and H is the same as the transmission distance parameter of the data transmission connection between those nodes, for which the set of partial data rates had been previously determined.

For establishing the new partial data transmission connections PDC11, PDC12, control instructions are sent to at least one network node of the network. Such control instructions are for example protocol messages of the Resource Reservation Protocol - Traffic Engineering (RSVP-TE) for establishing the new partial data transmission connections PDC11, PDC12 as paths according to the principle known as Generalized Multiprotocol Label Switching (GMPLS).

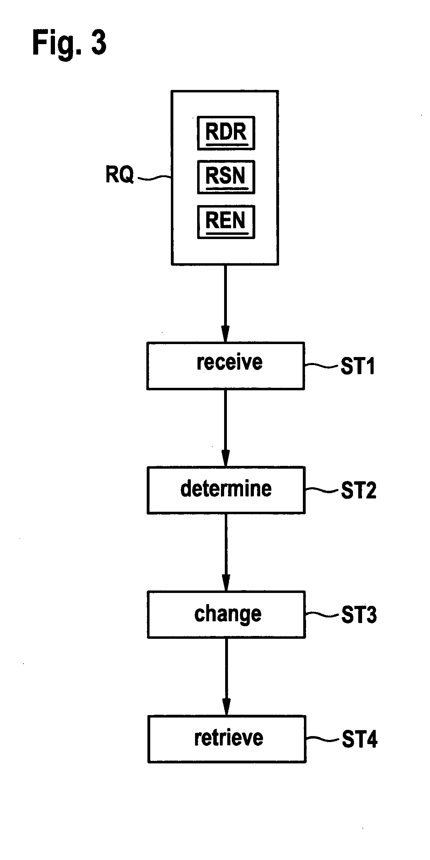

With respect to Figure 3, further preferred steps of the proposed method of retrieving a set of data rates for a desired data transmission connection from the previously described look-up table are described. In the step ST1, a request RQ for a data transmission connection is received. The request RQ contains the requested data rate RDR, an indication of the requested starting edge node RSN and an indication of the requested ending edge node REN. In a next step ST2, a transmission distance parameter of the distance between the requested starting edge node RSN and the requested ending edge node REN is determined, as it has been described in detailed previously. Using the requested data rate and the determined transmission distance parameter, a set of data rates shall be retrieved from the look-up table. The look-up table indicates different sets of data rates for different combinations of transmission distance parameters and data rates. In the case, that the look-up table does not contain an entry equal to the requested data rate, the requested data rate is changed within a step ST3 to a next largest data rate contained in the look-up table. In the case, that the look-up table does not contain an entry equal to the determined transmission distance parameter, the determined transmission distance parameter is changed within the step ST3 to a next largest transmission parameter contained in the look-up table. Within a next step ST4, the set of data rates is retrieved from the look-up table, using the possibly changed data rate and the possibly changed transmission distance parameter. By this, it is achieved, that even if the look-up table does not indicate a set of data rates for the exact requested data rate and/or the exact determined transmission distance parameter, it is still possible to make use of the look-up table. This is achieved, by changing the requested data rate and/or the determined transmission distance parameter, and by then retrieving a set of partial data rates as a slightly suboptimal solution for optimizing the network resources of the requested data transmission connections.

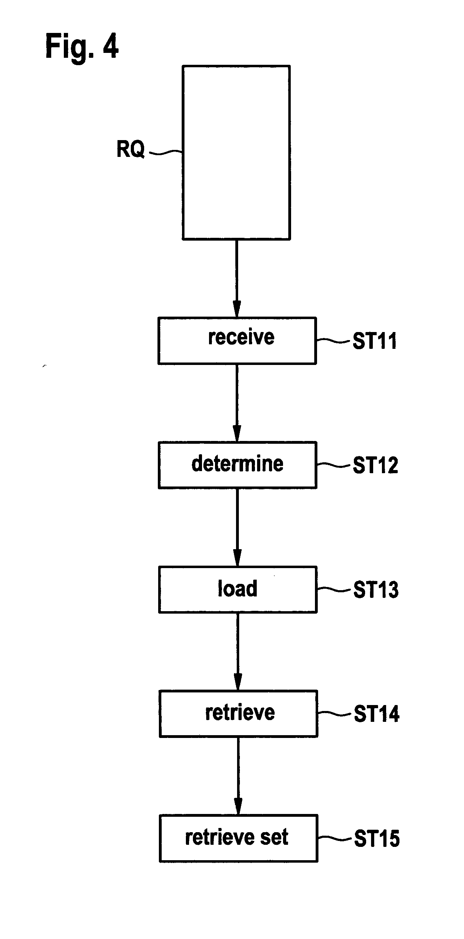

With respect to Figure 4, even further preferred steps of the proposed method of retrieving a set of data rates for a desired data transmission connection from the previously described look-up table are described. At that point of time, at which a request for a desired data transmission connection is received, there may already a number of network resources be occupied within the network. In the case, that a shortest path algorithm used for determining a transmission distance parameter does not take into account such a present occupation of resources, the effect is, that the transmission distances over which the resulting final partial data transmission connections will be established are larger than the determined transmission distance parameter. Therefore, an occupation of network resources is taken into account when retrieving a set of data rates for the desired data transmission connection from the look-up table. The inventors have observed, that an optimized solution can be achieved, if a present occupation of network resources is taken into account, by increasing the determined transmission distance parameter by an incremental transmission distance parameter value, which represents the network load, before retrieving the set of data rates from the look-up table using the increased transmission distance parameter. Figure 4 shows a step ST11, at which a request RQ for a desired data transmission connection is received. The request RQ contains the requested data rate RDR, an indication of the requested starting edge node RSN and an indication of the requested ending edge node REN. In a next step ST12, a transmission distance parameter of the distance between the requested starting edge node RSN and the requested ending edge node REN is determined, using a shortest path algorithm not taking into account a present occupation of resources. In a next step S13, a network load is determined, by taking into account a present occupation of network resources. Information about a present occupation of network resources is gathered for example acquired via messages of the RSVP-TE protocol. Next, in a step S14, an incremental transmission distance parameter value is retrieved using the determined network load, either directly from a storage device or from a database that can be reached by message exchange within the network. Furthermore, the determined transmission distance parameter is increased by the incremental transmission distance parameter value in the step S14. In a next step S15, a set of data rates is retrieved from a look-up-table, using the incremented transmission distance parameter and the requested data rate RDR.

For determining suitable values of the incremental distance parameter value, a person skilled in the art will determine for a given network at a given network load for a desired data transmission connection between two network nodes at first a transmission distance parameter, using a shortest path algorithm not taking an occupation of network resources into account. Next, an increased transmission distance parameter will be determined taking an occupation of network resources in to account, by determining a set of partial data transmission connections forming the desired data transmission connection, using for example the OSPF algorithm. The increased transmission distance parameter may for example be determined as the average transmission distance parameter of the determined partial data transmission connections. Finally, the incremental distance parameter value is determined, using the transmission distance parameter determined by the shortest path algorithm and the determined increased transmission distance parameter. For example, the incremental distance parameter value may be determined as the difference between the transmission distance parameter determined by the shortest path algorithm and the determined increased transmission distance parameter. A value indicating the determined network load and the determined incremental distance parameter value are then stored in a storage device or a database, for making them available to a method as described with reference to Figure 4.

### Third embodiment

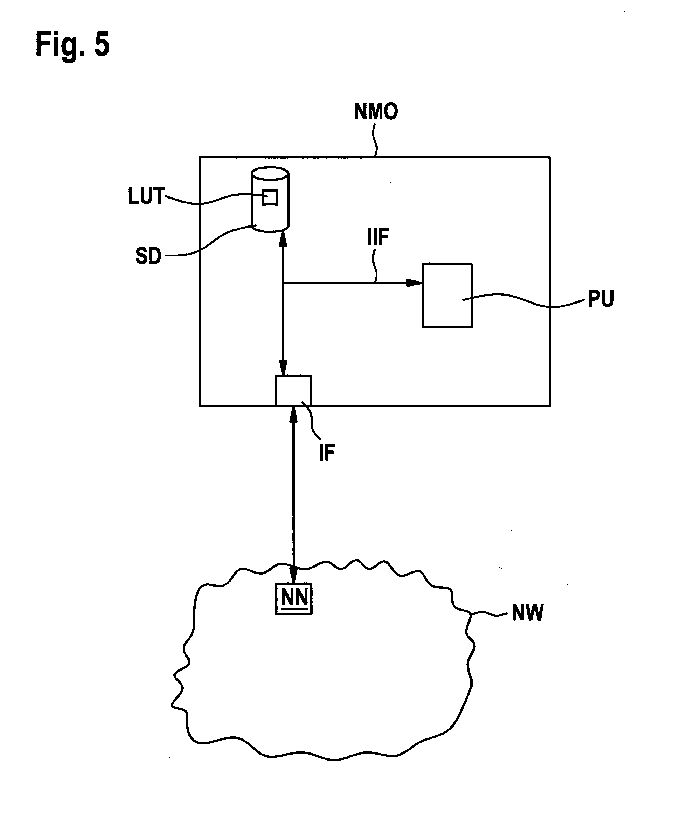

Figure 5 shows a network management device NMD for controlling at least one network node NN of a telecommunications network NW. The device NMD contains at least one interface IF, which is adapted to receive a request for a desired data transmission connection from the network NW. The interface IF is connected to the at least one network node NN of the network NW. The request contains a data rate, a starting edge node and an ending edge node. The request is received by the device NMD from the network NW in the form of a message, that may be generated outside or inside of the network NW and then sent via the network NW to the device NMD. Alternatively, the request is received via the interface IF from a device not belonging to the network, such as input devices of a terminal operated by a network manager. In this case, the interface IF is adapted to receive input signals indicating input action of a network manager. Furthermore, the device NMD contains at least one processing unit PU, for example a Digital Signal Processor (DSP) or a Central Processing Unit (CPU). The processing unit PU is adapted to determine a data transmission path between the requested edge nodes and a transmission distance parameter of the data transmission path. The processing unit PU does so, by analyzing network topology information, which is stored in a storage device SD. The network topology information may be acquired through the interface IF using protocol messages exchanged with network nodes of the network NW. The processing unit PU is furthermore adapted to retrieve a set of data rates from a preconfigured look-up table LUT stored in the storage device, using the requested data rate and the determined transmission distance parameter. The different sub-devices SD, IF, PU of the network management device NMD are connected to each other via an internal interface IIF, which is e.g. a data bus.

As shown in Figure 5, the processing unit PU is an integral part of the device NMD. Alternatively, the processing unit PU is not an integral part of the device NMD, but a part of another device, not shown in Figure 5, separate from the device NMD. In this case, the device NMD forwards the request to the separate device via messages sent through the interface IF, wherein the separate device determines the data transmission path between the requested edge nodes and the transmission distance parameter of the data transmission path, and wherein the device NMD then receives the determined transmission distance parameter from the separate device via a message received through the interface IF.

According to Figure 5, the table LUT is stored in the storage device SD. Alternatively, the table LUT may be stored in a separate database device, not shown in Figure 5, outside of the device NMD, in which case the set of data rates is retrieved from the database device using message exchange via the interface IF. The table LUT indicates for a data rate and a transmission distance parameter a set of data rates, wherein the sum of the set of data rates is equal to or greater than the corresponding data rate.

The processing unit PU is furthermore adapted to determine for each of the data rates of the retrieved set of data rates a respective partial data transmission path between the requested edge nodes. Furthermore, the processing unit PU is adapted to generate control instructions, such as messages of the RSVP-TE protocol, requesting of network nodes NN of the network NW an establishment of partial data transmission connections, having corresponding data rates as contained in the retrieved set of data rates, via the determined partial data transmission paths. The interface IF is furthermore adapted to send the control instructions to the network nodes.

### Fourth embodiment

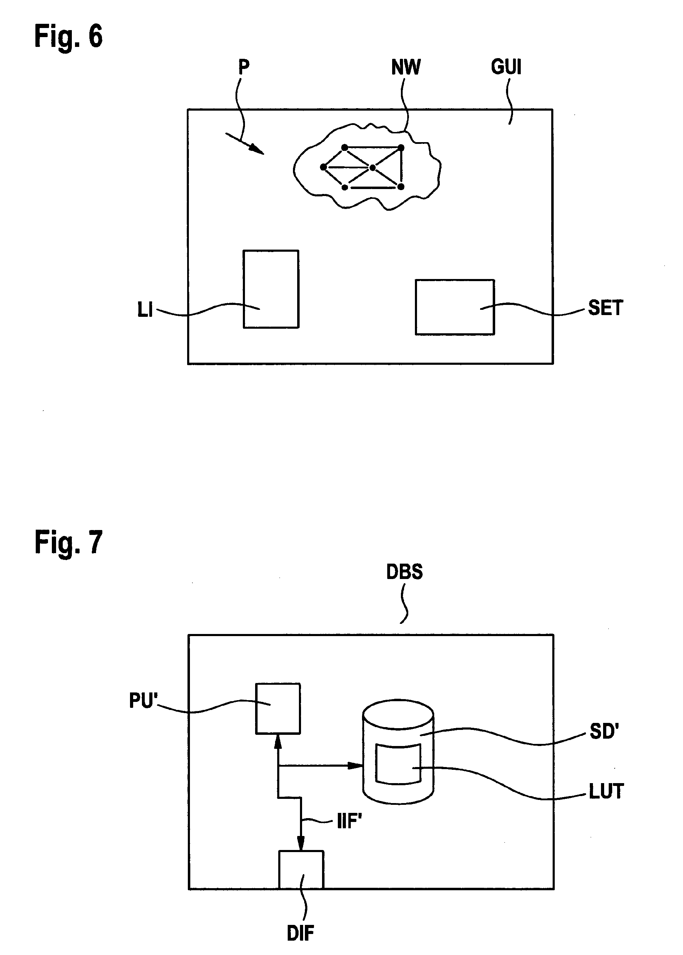

Figure 6 shows a proposed graphical user interface GUI for a network management system. The graphical user interface may be provided in the form of a separate software running on a multi-purpose computer, or alternatively in the form of software running on a Field Programmable Gate Array (FPGA). The user interface GUI is adapted to receive from a network manager user input commands identifying a request for a data transmission connection, as previously described. For this purpose, the user interface GUI may display the nodes of a network NW together with topology information of the network NW. Using input means, such as a computer mouse, the network manager moves a pointer P for selecting a starting edge node and an ending edge node from the displayed network NW, as well as a desired data rate from a list LI of data rates. Alternatively, the network manager may enter other user input commands for specifying a starting edge node and an ending edge node together with a data rate, for example by typing letters on a keyboard device, whose input signals may then be interpreted by the user interface GUI.

The user interface GUI is furthermore adapted to determine a data transmission path between the requested nodes and a transmission distance parameter of the data transmission path. Either the user interface GUI itself determines the data transmission path and the transmission distance parameter, or ,alternatively, the user interface GUI exchanges messages with other software and/or hardware devices, for instructing these other device to determine the data transmission path and the transmission distance parameter, and also to indicate the determined path and distance parameter to the user interface GUI.

The user interface GUI is adapted to retrieve a set of data rates from a look-up table, previously described, using the data rate and the transmission distance parameter. Either the user interface GUI itself stores the look-up table. Alternatively, the user interface GUI may retrieve the set of data rates from another software and/or hardware device storing the look-up table, by exchanging messages with this software and/or hardware device.

The user interface GUI is furthermore adapted to display the retrieved set SET of data rates.

### Fifth embodiment

Figure 7 shows a data base system DBS, containing a storage device SD' and a data interface DIF. The storage device SD' is adapted to store a look-up table as previously described. The data interface DIF is adapted to receive a request indicating a data rate and a transmission distance parameter. This request may be received in the form of a protocol message. Furthermore, the data base system DBS contains a processing unit PU', which is adapted to retrieve for the indicated data rate and the indicated transmission distance parameter a set of rates from the look-up table. The interface DIF is furthermore adapted to indicate the set of rates, preferably by sending a protocol message. The different devices SD', DIF,' PU' of the data base system are connected to each other via an internal interface IIF'.

In a preferred embodiment, the network management device previously described above is a multi-purpose computer, operated by a network manager, providing a graphical user interface. The multi-purpose computer either has a network interface for network access to a database providing network topology information. Alternatively, the computer receives network topology information from network nodes of the network and stores this information in a storage device.

Furthermore, the multi-purpose computer has an interface to input means in the form of a keyboard device and/or a mouse device, for receiving from a network manager input commands indicating a request for a desired data transmission connection as previously described.

The multi-purpose computer has at least one processing unit. This processing unit is adapted to determine a data transmission path between the requested edge nodes and a transmission distance parameter of the data transmission path. Alternatively, the processing unit may be adapted to send via its network interface the request for the data transmission connection to another device, which then determines the data transmission path and the transmission distance parameter of the data transmission path. The multi-purpose computer may then also be adapted to receive via its network interface the determined transmission distance parameter.

Using the determined transmission distance parameter, the processing unit of the computer either itself retrieves a set of data rates, using the determined transmission distance parameter and the requested data rate, from a look-up table stored in a storing device of the computer. Alternatively, the processing unit may retrieve the set of data rates from a database, by exchanging messages with the database through the network interface. The retrieved set of data rates may then be displayed to the network manager via a display connected to the computer, such as a thin-film transistor (TFT) screen.

## Claims

1. Data base system (DBS), comprising
a storage device (SD') adapted to store a preconfigured look-up table (LUT) indicating for
- a specific data rate, and
- a specific transmission distance parameter, wherein said specific transmission distance parameter specifies either a distance between network nodes without a unit or a physical transmission distance between network nodes with a unit,
a set of partial data rates for partial optical data transmission connections having same starting and ending edge nodes, wherein the sum of said partial data rates of said set is equal to or greater than said specific data rate, and
at least one data interface (DIF) adapted to
- receive a request indicating a data rate and a transmission distance parameter, wherein said indicated transmission distance parameter specifies either a distance between network nodes without a unit or a physical transmission distance between network nodes with a unit,
wherein said look-up table is a preconfigured table, in the sense that the data it contains is defined before said request is received,
at least one processing unit (PU') adapted to retrieve said indicated set of rates from said look-up table (LUT) using said indicated data rate and said indicated transmission distance parameter
wherein said data interface (DIF) is furthermore adapted to
- indicate said set of partial data rates corresponding to said indicated data rate and said indicated transmission distance parameter.

2. Network management device (NMD) for controlling at least one network node (NN) of an optical transmission network (NW), comprising at least one interface (IF) adapted to
- receive a request for an optical data transmission connection having a requested data rate, a requested starting edge node and a requested ending edge node, and
at least one processing unit (PU) adapted to
- determine a data transmission path between said requested edge nodes and to further determine a transmission distance parameter of said data transmission path,
wherein said determined transmission distance parameter specifies either a distance between said edge nodes without a unit or a physical transmission distance between network nodes with a unit,
a preconfigured look-up table (LUT) which indicates for
- a specific data rate, and
- a specific transmission distance parameter, wherein said specific transmission distance parameter specifies either a distance between network nodes without a unit or a physical transmission distance between network nodes with a unit,
a set of partial data rates for partial optical data transmission connections having same starting and ending edge nodes, wherein the sum of said set of data rates is equal to or greater than said specific data rate,
wherein said look-up table is a preconfigured table, in the sense that the data it contains is defined before said request is received,
wherein said processing unit (PU) is furthermore adapted to
- retrieve said set of partial data rates from said preconfigured look-up table (LUT), using said requested data rate and said determined transmission distance parameter.

3. Network management device (NMD) according to claim 2,
wherein said processing unit (PU) is furthermore adapted to
- determine for each of said partial data rates of said set a respective partial data transmission path between said requested edge nodes, and to
- generate control instructions requesting of network nodes of said telecommunications network an establishment of partial optical data transmission connections, having said data rates of said set, via said partial data transmission paths,
and wherein said interface (IF) is furthermore adapted to send said control instruction to said at least one network node (NN).

4. Graphical user interface (GUI) for a network management system, adapted to receive at least one user input command identifying a request for an optical data transmission connection having a requested data rate, a requested starting edge node and a requested ending edge node,
furthermore adapted to
- determine a data transmission path between said requested edge nodes and to further determine a transmission distance parameter of said data transmission path, wherein said determined transmission distance parameter specifies either a distance between said edge nodes without a unit or a physical transmission distance between said edge nodes with a unit
- retrieve a set of partial data rates for partial optical data transmission connections, having same starting and ending edge nodes, from a preconfigured look-up table, using said requested data rate and said determined transmission distance parameter,
wherein said look-up table is a preconfigured table, in the sense that the data it contains is defined before said request is received,
wherein said preconfigured look-up table indicates for a specific data rate and a specific transmission distance parameter a set of partial data rates for partial optical data transmission connections, wherein said specific transmission distance parameter specifies either a distance between network nodes without a unit or a physical transmission distance between network nodes with a unit,
and wherein the sum of said set of partial data rates is equal to or greater than said specific data rate,
and furthermore adapted to display said retrieved set of data rates.

5. Method for generating a preconfigured look-up table (LUT) for retrieving a set of partial data rates for an optical data transmission connection,
wherein said look-up table is a preconfigured table, in the sense that the data it contains is defined before a request for said optical data transmission connection is received,
said look-up table (LUT) indicating for
- a specific data rate (DR1), and
- a specific transmission distance parameter (TD1),
a set of partial data rates (S1) for partial optical data transmission connections having same starting and ending edge nodes,
wherein said specific transmission distance parameter specifies either a distance between network nodes without a unit or a physical transmission distance between network nodes with a unit,
wherein the sum of said set (S1) of data rates is equal to or greater than said specific data rate (DR1),
wherein the generation of said set (S1) of partial data rates is performed, by determining for at least one optical test data transmission connection, having a test data rate equal to said data rate and a test transmission distance parameter equal to said transmission distance parameter, a test set of partial data rates, wherein said test transmission distance parameter either specifies a physical transmission distance between network nodes together with a unit or a path metric between said network nodes without a unit,
and wherein said step of determination includes an optimization of a number of necessary optical network resources for partial optical data transmission connections using said test set of partial data rates
and wherein said set (S1) of partial data rates is determined based on said test set of partial data rates.

6. Method according to claim 5,
wherein said set (S1) of partial data rates is generated, by determining for one optical test data transmission connection, having a test data rate equal to said data rate and a test transmission distance parameter equal to said transmission distance parameter, a test set of partial data rates for which a number of necessary network resources is optimized,
and by choosing said set (S1) of partial data rates as said determined test set of partial data rates.

7. Method according to claim 5,
wherein said test set of partial data rates is determined, by choosing for a number of optical test data transmission connections, having respective transmission distance parameters equal to said transmission distance parameter and respective test transmission distance parameters equal to said transmission distance parameter, respective test sets of partial data rates,
wherein for each respective test set of partial data rates a respective number of necessary network resources is minimized,
and wherein said set (S1) of partial data rates is chosen from said determined test sets of partial data rates.

8. Method according to claim 5,
wherein said set (S1) of partial data rates is generated,
by determining for a number of partial test data transmission connections, having respective transmission distance parameters equal to said transmission distance parameter and respective test transmission distance parameters equal to said transmission distance parameter,
respective test sets of partial data rates via an Integer Linear Programming algorithm, such that an overall number of necessary optical network resources used by said test data transmission connections is minimized,
and wherein said set (S1) of partial data rates is chosen from those determined test sets of partial data rates, whose corresponding optical test data transmission connections have transmission distance parameters equal to said transmission distance parameter.

9. Method for retrieving a set of partial data rates (S1) for a data transmission connection, comprising
receiving a request (RQ) for a data transmission connection having a requested data rate (RDR), a requested starting edge node (RSN) and a requested ending edge node (REN),
determining a data transmission path between said requested edge nodes (RSN, REN) and a transmission distance parameter of said data transmission path, wherein said determined transmission distance parameter specifies either a distance between said edge nodes without a unit or a physical transmission distance between said edge nodes with a unit
retrieving a set (S1) of partial data rates for partial optical data transmission connections, having same starting and ending edge nodes, from a preconfigured look-up table (LUT), using said requested data rate (RDR) and said determined transmission distance parameter,
wherein said preconfigured look-up table (LUT) indicates for
- a specific data rate (DR1), and
- a specific transmission distance parameter (TD1),
a set (S1) of partial data rates for partial optical data transmission connections having same starting and ending edge nodes,
wherein said specific transmission distance parameter specifies either a distance between network nodes without a unit or a physical transmission distance between network nodes with a unit
wherein the sum of said set (S1) of partial data rates of said partial optical data transmission connections is equal to or greater than said requested data rate, and wherein said look-up table is a preconfigured table, in the sense that the data it contains is defined before said request is received.

10. Method according to claim 9,
comprising furthermore
determining for each of said partial data rates of said set (S1) a respective partial data transmission path between said requested edge nodes, and
sending control instruction to at least one network node for establishing partial optical data transmission connections, having said data rates of said set (S1), via said partial data transmission paths.

11. Method according to claim 9 or 10,
comprising furthermore
changing said determined transmission distance parameter to a transmission distance parameter contained in said look-up table.

12. Method according to claim 9, 10 or 11,
comprising furthermore
changing said requested data rate to a data rate contained in said look-up table.

13. Method according to any of the claims 9, 10 or 11,
comprising furthermore
retrieving an incremental transmission distance parameter value representing a network load,
and increasing said determined transmission distance parameter by said incremental transmission distance parameter value.

## Patentansprüche

1. Datenbanksystem (DBS), umfassend:
Eine Speichervorrichtung (SD'), ausgelegt für das Speichern einer vorkonfigurierten Lookup-Tabelle (LUT), welche angibt:
- Eine spezifische Datenrate, und
- einen spezifischen Übertragungsdistanzparameter, wobei der besagte spezifische Übertragungsdistanzparameter entweder eine Distanz zwischen Netzwerkknoten ohne einer Einheit oder eine physische Übertragungsdistanz zwischen Netzwerkknoten mit einer Einheit festlegt,
einen Satz von Teildatenraten für optische Teil-Datenübertragungsverbindungen mit denselben Anfangs- und End-Randknoten, wobei die Summe der besagten Teildatenraten des besagten Satzes gleich der oder größer als die besagte(n) spezifische(n) Datenrate ist, und
mindestens eine Datenschnittstelle (DIF), die für den
- Empfang einer Anforderung, welche eine Datenrate und einen Übertragungsdistanzparameter angibt, ausgelegt ist, wobei der besagte angegebene Übertragungsdistanzparameter entweder eine Distanz zwischen Netzwerkknoten ohne eine Einheit oder eine physische Übertragungsdistanz zwischen Netzwerkknoten mit einer Einheit festlegt,
wobei die besagte Lookup-Tabelle insofern eine vorkonfigurierte Tabelle ist, als die darin enthaltenen Daten vor Empfang der besagten Anforderung definiert werden,
mindestens eine Verarbeitungseinheit (PU'), welche dazu ausgelegt ist, den besagten angegebenen Satz von Raten unter Verwendung der besagten angegebenen Datenrate und des besagten angegebenen Übertragungsdistanzparameter aus der besagten Lookup-Tabelle (LUT) abzurufen,
wobei die besagte Datenschnittstelle (DIF) weiterhin dazu ausgelegt ist,
- den besagten Satz von Teildatenraten, welcher der besagten angegebenen Datenrate und dem besagten angegebenen Übertragungsdistanzparameter entspricht, anzugeben.

2. Netzwerkverwaltungsvorrichtung (NMD) zur Steuerung mindestens eines Netzwerkknotens (NN) eines optischen Übertragungsnetzwerks (NW), umfassend mindestens eine Schnittstelle (IF), welche dazu ausgelegt ist,
- eine Anforderung für eine optische Datenübertragungsverbindung mit einer geforderten Datenrate, einem geforderten Anfangs-Randknoten und einem geforderten End-Randknoten zu empfangen, und
mindestens eine Verarbeitungseinheit (PU'), welche dazu ausgelegt ist,
- einen Datenübertragungspfad zwischen den besagten geforderten Randknoten zu bestimmen und weiterhin einen Übertragungsdistanzparameter des besagten Datenübertragungspfads zu bestimmen,
wobei der besagte bestimmte Übertragungsdistanzparameter entweder eine Distanz zwischen den besagten Netzwerkknoten ohne eine Einheit oder ein physische Übertragungsdistanz zwischen Netzwerkknoten mit einer Einheit festlegt,
eine vorkonfigurierte Lookup-Tabelle (LUT), welche für
- eine spezifische Datenrate, und
- einen spezifischen Übertragungsdistanzparameter, wobei der besagte spezifische Übertragungsdistanzparameter entweder eine Distanz zwischen Netzwerkknoten ohne eine Einheit oder eine physische Übertragungsdistanz zwischen Netzwerkknoten mit einer Einheit festlegt,
einen Satz von Teildatenraten für optische Teil-Datenübertragungsverbindungen mit denselben Anfangs- und End-Randknoten angibt, wobei die Summe des besagten Satzes von Datenraten gleich der oder größer als die besagte(n) spezifische(n) Datenrate ist, wobei die besagte Lookup-Tabelle insofern eine vorkonfigurierte Tabelle ist, als die darin enthaltenen Daten vor dem Empfang der besagten Anforderung definiert werden,
wobei die besagte Verarbeitungseinheit (PU) weiterhin dazu ausgelegt ist,
- den besagten Satz von partialen Datenraten unter Verwendung der besagten geforderten Datenrate und der besagten bestimmten Übertragungsdistanzparameter aus der besagten vorkonfigurierten Lookup-Tabelle (LUT) abzurufen.

3. Netzwerkverwattungsvorrichtung (NMD) nach Anspruch 2,
wobei die besagte Verarbeitungsvorrichtung (PU) weiterhin dazu ausgelegt ist,
- für eine jede der besagten Datenraten des besagten Satzes einen entsprechenden Teil-Datenübertragungspfad zwischen den besagten geforderten Randknoten zu bestimmen, und
- Steuerbefehle zu erzeugen, welche die Netzwerkknoten des besagten Telekommunikationsnetzwerks auffordern, über die besagten Teil-Datenübertragungspfade optische Teil-Datenübertragungsverbindungen mit den besagten Datenraten des besagten Satzes aufzubauen,
und wobei die besagte Schnittstelle (IF) weiterhin dazu ausgelegt ist, den besagten Steuerbefehl an den besagten mindestens einen Netzwerkknoten (NN) zu senden.

4. Grafische Benutzerschnittstelle (GUI) für ein Netzwerkverwaltungssystem,
ausgelegt für den Empfang mindestens eines vom Benutzer eingegebenen Befehls, um eine Anforderung für eine optische Datenübertragungsverbindung mit einer geforderten Datenrate, einem geforderten Anfangs-Randknoten und einem geforderten End-Randknoten zu identifizieren,
und weiterhin ausgelegt für
- das Bestimmen eines Datenübertragungspfads zwischen den besagten geforderten Randknoten und das weitere Bestimmen eines Übertragungsdistanzparameters des besagten Datenübertragungspfads, wobei der besagte bestimmte Übertragungsdistanzparameter entweder eine Distanz zwischen den besagten Randknoten ohne eine Einheit oder eine physische Übertragungsdistanz zwischen den besagten Netzwerkknoten mit einer Einheit festlegt,
- das Abrufen eines Satzes von Teildatenraten für optische Teil-Datenübertragungsverbindungen, welche denselben Anfangs- und denselben End-Randknoten aufweisen, aus einer vorkonfigurierten Lookup-Tabelle unter Verwendung der besagten geforderten Datenrate und des besagten bestimmten Übertragungsdistanzparameters,
wobei die besagte Lookup-Tabelle insofern eine vorkonfigurierte Tabelle ist, als die darin enthaltenen Daten vor dem Empfang der besagten Anforderung definiert werden,
wobei die besagte vorkonfigurierte Lookup-Tabelle für eine spezifische Datenrate und einen spezifischen Übertragungsdistanzparameter einen Satz von Teildatenraten für optische Teil-Datenübertragungsverbindungen angibt, wobei der besagte spezifische Übertragungsdistanzparameter entweder eine Distanz zwischen Netzwerkknoten ohne eine Einheit oder eine physische Übertragungsdistanz zwischen Netzwerkknoten mit einer Einheit festlegt,
und wobei die Summe des besagten Satzes von partialen Datenraten gleich der besagten spezifischen oder größer als die besagte spezifische Datenrate ist,
und weiterhin für das Anzeigen des besagten abgerufenen Satzes von Datenraten ausgelegt ist.

5. Verfahren zum Erzeugen einer vorkonfigurierten Lookup-Tabelle (LUT) für das Abrufen eines Satzes von Teildatenraten für eine optische Datenübertragungsverbindung, wobei die besagte Lookup-Tabelle insofern eine vorkonfigurierte Tabelle ist, als die darin enthaltenen Daten vor dem Empfang einer Anforderung für die besagte optische Datenübertragungsverbindung definiert werden,
wobei die besagte Lookup-Tabelle (LUT) für
- eine spezifische Datenrate (DR1) und
- einen spezifischen Übertragungsparameter (TD1)
einen Satz von Teildatenraten (S1) für optische Teil-Datenübertragungsverbindungen mit demselben Anfangs- und demselben End-Randknoten angibt,
wobei der besagte spezifische Übertragungsdistanzparameter entweder eine Distanz zwischen Netzwerkknoten ohne eine Einheit oder eine physische Übertragungsdistanz zwischen Netzwerkknoten mit einer Einheit festlegt,
wobei die Summe des besagten Satzes (S1) von Datenraten gleich der besagten spezifischen oder größer als die besagte spezifische Datenrate (DR1) ist,
wobei die Erzeugung des besagten Satzes (S1) von Teildatenraten durch Bestimmen, für mindestens eine optische Test-Datenübertragungsverbindung mit einer Testdatenrate, welche der besagten Datenrate entspricht, und einem Test-Übertragungsdistanzparameter, welcher dem besagten Übertragungsdistanzparameter entspricht, eines Testsatzes von Teildatenraten durchgeführt wird, wobei der besagte Test-Übertragungsdistanzparameter entweder eine physische Übertragungsdistanz zwischen Netzwerkknoten mit einer Einheit oder eine Pfadmetrik zwischen den besagten Netzwerkknoten ohne eine Einheit festlegt,
und wobei der besagte Schritt des Bestimmens eine Optimierung einer Anzahl von erforderlichen optischen Netzwerkressourcen für optische Teil-Datenübertragungsverbindungen unter Verwendung des besagten Testsatzes von Teildatenraten umfasst,
und wobei der besagte Satz (S1) von Teildatenraten auf der Basis des besagten Testsatzes von Teildatenraten bestimmt wird.

6. Verfahren nach Anspruch 5,
wobei der besagte Satz (S1) von Teildatenraten durch das Bestimmen, für eine einzelne optische Test-Datenübertragungsverbindung mit einer Testdatenrate, welche der besagten Datenrate entspricht, und einem Test-Übertragungsdistanzparameter, welcher dem besagten Übertragungsdistanzparameter entspricht, eines Testsatzes von Teildatenraten, für welchen eine Anzahl von erforderlichen Netzwerkressourcen optimiert wird,
und durch Auswählen des besagten Satzes (S1) von Teildatenraten als der besagte bestimmte Testsatz von Teildatenraten erzeugt wird.

7. Verfahren nach Anspruch 5,
wobei der besagte Testsatz von Teildatenraten durch das Auswählen, für eine Anzahl von optischen Test-Datenübertragungsverbindungen mit jeweiligen Übertragungsdistanzparametern, welche dem besagten Übertragungsdistanzparameter entsprechen, und jeweiligen Test-Übertragungsdistanzparametern, welche dem besagten Übertragungsdistanzparameter entsprechen, von entsprechenden Testsätzen von Teildatenraten bestimmt wird,
wobei für jeden entsprechenden Testsatz von Teildatenraten eine entsprechende Anzahl von erforderlichen Netzwerkressourcen minimiert wird,
und wobei der besagte Satz (S1) von Teildatenraten aus den besagten bestimmten Testsätzen von Teildatenraten ausgewählt wird.

8. Verfahren nach Anspruch 5,
wobei der besagte Satz (S1) von Teildatenraten
durch das Bestimmen, für eine Anzahl von Teil-Testdatenübertragungsverbindungen mit jeweiligen Übertragungsdistanzparametern, welche dem besagten Übertragungsdistanzparameter entsprechen, und jeweiligen Test-Übertragungsdistanzparametern, welche dem besagten Übertragungsdistanzparameter entsprechen,
von entsprechenden Testsätzen von Teildatenraten anhand eines Algorithmus für die ganzzahlige lineare Programmierung erzeugt wird, so dass eine Gesamtanzahl von erforderlichen optischen Netzwerkressourcen, welche von den besagten Test-Datenübertragungsverbindungen verwendet werden, minimiert wird,
und wobei der besagte Satz (S1) von Teildatenraten aus denjenigen bestimmten Testsätzen von Teilratendaten ausgewählt wird, deren entsprechende optische Test-Datenübertragungsverbindungen Übertragungsdistanzparameter aufweisen, welche dem besagten Übertragungsdistanzparameter entsprechen.

9. Verfahren zum Abrufen eines Satzes von Teildatenraten (S1) für eine Datenübertragungsverbindung, umfassend::
Empfangen einer Anforderung (RQ) für eine Datenübertragungsverbindung mit einer geforderten Datenrate (RDR), einem geforderten Anfangs-Randknoten (RSN) und einem geforderten End-Randknoten (REN),
Bestimmen eines Datenübertragungspfads zwischen den besagten geforderten Randknoten (RSN, REN) und eines Übertragungsdistanzparameters des besagten Datenübertragungspfads, wobei der besagte bestimmte Übertragungsdistanzparameter entweder eine Distanz zwischen den besagten Randknoten ohne eine Einheit oder eine physische Übertragungsdistanz zwischen den besagten Randknoten mit einer Einheit festlegt,
Abrufen eines Satzes (S1) von Teildatenraten für optische Teil-Datenübertragungsverbindungen mit demselben Anfangs- und demselben End-Randknoten, aus einer vorkonfigurierten Lookup-Tabelle (LUT) unter Verwendung der besagten geforderten Datenrate (RDR) und des besagten bestimmten Übertragungsdistanzparameters,
wobei die besagte vorkonfigurierte Lookup-Tabelle (LUT) für
- eine spezifische Datenrate (DR1), und
- einen spezifischen Übertragungsdistanzparameter (TD1)
einen Satz (S1) von Teildatenraten für optische Teil-Datenübertragungsverbindungen mit demselben Anfangs- und demselben End-Randknoten angibt,
wobei der besagte spezifische Übertragungsdistanzparameter entweder eine Distanz zwischen Netzwerkknoten ohne eine Einheit oder eine physischen Übertragungsdistanz zwischen Netzwerkknoten mit einer Einheit festlegt,
wobei die Summe des besagten Satzes (S1) von Teildatenraten der besagten optische Teil-Datenübertragungsverbindungen gleich der besagten geforderten oder größer als die besagte geforderte Datenrate ist,
und wobei die besagte Lookup-Tabelle insofern eine vorkonfigurierte Tabelle ist, als die darin enthaltenen Daten vor dem Empfang der besagten Anforderung definiert werden.

10. Verfahren nach Anspruch 9,
weiterhin umfassend:
Bestimmen, für eine jede der besagten Teildatenraten des besagten Satzes (S1), eines entsprechenden Teil-Datenübertragungspfads zwischen den besagten geforderten Randknoten, und
Senden eines Steuerbefehls an mindestens einen Netzwerkknoten für den Aufbau von optische Teil-Datenübertragungsverbindungen mit den besagten Datenraten des besagten Satzes (S1) über die besagten Teil-Datenübertragungspfade.

11. Verfahren nach Anspruch 9 oder 10,
weiterhin umfassend:
Ändern des besagten bestimmten Übertragungsdistanzparameters in einen in der besagten Lookup-Tabelle enthaltenen Übertragungsdistanzparameter.

12. Verfahren nach Anspruch 9, 10, 11,
weiterhin umfassend:
Ändern der besagten geforderten Datenrate in eine in der besagten Lookup-Tabelle enthaltene Datenrate.

13. Verfahren nach einem beliebigen der Ansprüche 9, 10 oder 11,
weiterhin umfassend:
Abrufen eines Übertragungsdistanzparameter-Inkrementalwertes, welcher eine Netzwerkauslastung darstellt,
und Erhöhen des besagten bestimmten Übertragungsdistanzparameters um den besagten Übertragungsdistanzparameter-Inkrementalwert.

## Revendications

1. Système de base de données (DBS), comprenant
un dispositif de stockage (SD') adapté pour stocker une table de consultation (LUT) pré-configurée indiquant pour
- un débit de données spécifique, et
- un paramètre de distance de transmission spécifique, ledit paramètre de distance de transmission spécifique spécifiant une distance entre des noeuds de réseau sans unité ou une distance de transmission physique entre des noeuds de réseau avec une unité,
un ensemble de débits de données partielles pour des connexions de transmission de données optiques partielles ayant les mêmes noeuds périphériques de départ et d'arrivée, la somme desdits débits de données partielles dudit ensemble étant égale ou supérieure audit débit de données spécifique, et
au moins une interface de données (DIF) adaptée pour
- recevoir une demande indiquant un débit de données et un paramètre de distance de transmission, ledit paramètre de distance de transmission indiqué spécifiant une distance entre des noeuds de réseau sans unité ou une distance de transmission physique entre des noeuds de réseau avec une unité,
ladite table de consultation étant une table pré-configurée, dans le sens où les données qu'elle contient sont définies avant la réception de ladite demande,
au moins une unité de traitement (PU') adaptée pour récupérer ledit ensemble de débits indiqué à partir de ladite table de consultation (LUT) en utilisant ledit débit de données indiqué et ledit paramètre de distance de transmission indiqué
ladite interface de données (DIF) étant en outre adaptée pour
- indiquer ledit ensemble de débits de données partielles correspondant audit débit de données indiqué et audit paramètre de distance de transmission indiqué.

2. Dispositif de gestion de réseau (NMD) pour commander au moins un noeud de réseau (NN) d'un réseau de transmission optique (NW), comprenant au moins une interface (IF) adaptée pour
- recevoir une demande pour une connexion de transmission de données optiques ayant un débit de données demandé, un noeud périphérique de départ demandé et un noeud périphérique d'arrivée demandé, et
au moins une unité de traitement (PU) adaptée pour
- déterminer un chemin de transmission de données entre lesdits noeuds périphériques demandés et pour déterminer par ailleurs un paramètre de distance de transmission dudit chemin de transmission de données,
ledit paramètre de distance de transmission déterminé spécifiant une distance entre lesdits noeuds périphériques sans unité ou une distance de transmission physique entre des noeuds de réseau avec une unité,
une table de consultation (LUT) pré-configurée qui indique pour
- un débit de données spécifique, et
- un paramètre de distance de transmission spécifique, ledit paramètre de distance de transmission spécifique spécifiant une distance entre des noeuds de réseau sans unité ou une distance de transmission physique entre des noeuds de réseau avec une unité,
un ensemble de débits de données partielles pour des connexions de transmission de données optiques partielles ayant les mêmes noeuds périphériques de départ et d'arrivée, la somme dudit ensemble de débits de données étant supérieure ou égale audit débit de données spécifique,
ladite table de consultation étant une table pré-configurée, dans le sens où les données qu'elle contient sont définies avant la réception de ladite demande,
ladite unité de traitement (PU) étant en outre adaptée pour
- récupérer ledit ensemble de débits de données partielles à partir de ladite table de consultation (LUT) pré-configurée, en utilisant ledit débit de données demandé et ledit paramètre de distance de transmission déterminé.

3. Dispositif de gestion de réseau (NMD) selon la revendication 2,
dans lequel ladite unité de traitement (PU) est en outre adaptée pour
- déterminer pour chacun desdits débits de données partielles dudit ensemble un chemin de transmission de données partielles respectif entre lesdits noeuds périphériques demandés, et pour
- générer des instructions de commande demandant aux noeuds de réseau dudit réseau de télécommunication un établissement de connexions de transmission de données optiques partielles, ayant lesdits débits de données dudit ensemble, par l'intermédiaire desdits chemins de transmission de données partielles,
et dans lequel ladite interface (IF) est en outre adaptée pour envoyer ladite instruction de commande audit au moins un noeud de réseau (NN).

4. Une interface utilisateur graphique (IUG) pour un système de gestion de réseau, adaptée pour recevoir au moins une commande d'entrée d'utilisateur identifiant une demande pour une connexion de transmission de données optiques ayant un débit de données demandé, un noeud périphérique de départ demandé et un noeud périphérique d'arrivée demandé,
adaptée en outre pour
- déterminer un chemin de transmission de données entre lesdits noeuds périphériques demandés et pour déterminer en outre un paramètre de distance de transmission dudit chemin de transmission de données, ledit paramètre de distance de transmission déterminé spécifiant une distance entre lesdites noeuds périphériques sans unité ou une distance de transmission physique entre lesdits noeuds périphériques avec une unité
- récupérer un ensemble de débits de données partielles pour des connexions de transmission de données optiques partielles, ayant les mêmes noeuds périphériques de départ et d'arrivée, à partir d'une table de consultation pré-configurée, en utilisant ledit débit de données demandé et ledit paramètre de distance de transmission déterminé,
ladite table de consultation étant une table pré-configurée, dans le sens où les données qu'elle contient sont définies avant la réception de ladite demande, ladite table de consultation pré-configurée indiquant pour un débit de données spécifique et un paramètre de distance de transmission spécifique un ensemble de débits de données partielles pour des connexions de transmission de données optiques partielles, ledit paramètre de distance de transmission spécifique spécifiant une distance entre des noeuds de réseau sans unité ou une distance de transmission physique entre des noeuds de réseau avec une unité,
la somme dudit ensemble de débits de données partielles étant supérieure ou égale audit débit de données spécifique,
et adaptée en outre pour afficher ledit ensemble récupéré de débits de données.

5. Procédé pour générer une table de consultation (LUT) pré-configurée pour récupérer un ensemble de débits de données partielles pour une connexion de transmission de données optiques,
ladite table de consultation étant une table pré-configurée, dans le sens où les données qu'elle contient sont définies avant la réception d'une demande pour ladite connexion de transmission de données optiques,
ladite table de consultation (LUT) indiquant pour
- un débit de données spécifique (DR1), et
- un paramètre de distance de transmission spécifique (TD1),
un ensemble de débits de données partielles (S1) pour des connexions de transmission de données optiques partielles ayant les mêmes noeuds périphériques de départ et d'arrivée,
ledit paramètre de distance de transmission spécifique spécifiant une distance entre des noeuds de réseau sans unité ou une distance de transmission physique entre des noeuds de réseau avec une unité,
la somme dudit ensemble (S1) de débits de données étant supérieure ou égale audit débit de données spécifique (DR1),
dans lequel la génération dudit ensemble (S1) de débits de données partielles est réalisée, en déterminant pour au moins une connexion de transmission de données de test optiques, ayant un débit de données de test égal audit débit de données et un paramètre de distance de transmission de test égal audit paramètre de distance de transmission, un ensemble de test de débits de données partielles, ledit paramètre de distance de transmission de test spécifiant une distance de transmission physique entre des noeuds de réseau avec une unité ou une métrique de chemin entre lesdits noeuds de réseau sans unité,
et dans lequel ladite étape de détermination comprend une optimisation d'un nombre de ressources de réseau optique nécessaires pour des connexions de transmission de données optiques partielles en utilisant ledit ensemble de test de débits de données partielles
et dans lequel ledit ensemble (S1) de débits de données partielles est déterminé sur la base dudit ensemble de test de débits de données partielles.

6. Procédé selon la revendication 5,
dans lequel ledit ensemble (S1) de débits de données partielles est généré, en déterminant pour une connexion de transmission de données de test optiques, ayant un débit de données de test égal audit débit de données et un paramètre de distance de transmission de test égal audit paramètre de distance de transmission, un ensemble de test de débits de données partielles pour lesquels un nombre de ressources de réseau nécessaires est optimisé,
et en choisissant ledit ensemble (S1) de débits de données partielles comme ledit ensemble de test déterminé de débits de données partielles.

7. Procédé selon la revendication 5,
dans lequel ledit ensemble de test de débits de données partielles est déterminé, en choisissant pour un nombre de connexions de transmission de données de test optiques, ayant des paramètres de distance de transmission respectifs égaux audit paramètre de distance de transmission et des paramètres de distance de transmission de test respectifs égaux audit paramètre de distance de transmission, des ensembles de test respectifs de débits de données partielles,
dans lequel pour chaque ensemble de test respectif de débits de données partielles un nombre respectif de ressources de réseau nécessaires est réduit au minimum,
et dans lequel ledit ensemble (S1) de débits de données partielles est choisi à partir desdits ensembles de test déterminés de débits de données partielles.

8. Procédé selon la revendication 5,
dans lequel ledit ensemble (S1) de débits de données partielles est généré,
en déterminant pour un nombre de connexions de transmission de données de test partielles, ayant des paramètres de distance de transmission respectifs égaux audit paramètre de distance de transmission et des paramètres de distance de transmission de test respectifs égaux audit paramètre de distance de transmission,
des ensembles de test respectifs de débits de données partielles par l'intermédiaire d'un algorithme de programmation linéaire entière, de sorte qu'un nombre global de ressources de réseau optique nécessaires utilisées par lesdites connexions de transmission de données de test soit réduit au minimum,
et dans lequel ledit ensemble (S1) de débits de données partielles est choisi parmi ces ensembles de test déterminés de débits de données partielles, dont les connexions de transmission de données de test optiques correspondantes ont des paramètres de distance de transmission égaux audit paramètre de distance de transmission.

9. Procédé pour récupérer un ensemble de débits de données partielles (S1) pour une connexion de transmission de données, comprenant les étapes suivantes
recevoir une demande (RQ) pour une connexion de transmission de données ayant un débit de données demandé (RDR), un noeud périphérique de départ demandé (RSN) et un noeud périphérique d'arrivée demandé (REN),
déterminer un chemin de transmission de données entre lesdits noeuds périphériques demandés (RSN, REN) et un paramètre de distance de transmission dudit chemin de transmission de données, ledit paramètre de distance de transmission déterminé spécifiant une distance entre lesdits noeuds périphériques sans unité ou une distance de transmission physique entre lesdits noeuds périphériques avec une unité
récupérer un ensemble (S1) de débits de données partielles pour des connexions de transmission de données optiques partielles, ayant les mêmes noeuds périphériques de départ et d'arrivée, à partir d'une table de consultation (LUT) pré-configurée, en utilisant ledit débit de données demandé (RDR) ledit paramètre de distance de transmission déterminé,
dans lequel ladite table de consultation (LUT) pré-configurée indique pour
- un débit de données spécifique (DR1), et
- un paramètre de distance de transmission spécifique (TD1),
un ensemble (S1) de débits de données partielles pour des connexions de transmission de données optiques partielles ayant les mêmes noeuds périphériques de départ et d'arrivée,
dans lequel ledit paramètre de distance de transmission spécifique spécifie une distance entre des noeuds de réseau sans unité ou une distance de transmission physique entre des noeuds de réseau avec une unité
dans lequel la somme dudit ensemble (S1) de débits de données partielles desdites connexions de transmission de données optiques partielles est supérieure ou égale audit débit de données demandé, et dans lequel ladite table de consultation est une table pré-configurée, dans le sens où les données qu'elle contient sont définies avant la réception de ladite demande.

10. Procédé selon la revendication 9,
comprenant en outre les étapes suivantes
déterminer pour chacun desdits débits de données partielles dudit ensemble (S1) un chemin de transmission de données partielles respectif entre lesdits noeuds périphériques demandés, et
envoyer une instruction de commande à au moins un noeud de réseau pour établir des connexions de transmission de données optiques partielles, ayant lesdits débits de données dudit ensemble (S1), par l'intermédiaire desdits chemins de transmission de données partielles.

11. Procédé selon la revendication 9 ou 10,
comprenant en outre l'étape suivante
changer ledit paramètre de distance de transmission déterminé en un paramètre de distance de transmission contenu dans ladite table de consultation.

12. Procédé selon la revendication 9, 10 ou 11,
comprenant en outre l'étape suivante
changer ledit débit de données demandé en un débit de données contenu dans ladite table de consultation.

13. Procédé selon l'une quelconque des revendications 9, 10 et 11,
comprenant en outre les étapes suivantes
récupérer une valeur de paramètre de distance de transmission incrémentiel représentant une charge de réseau,
et augmenter ledit paramètre de distance de transmission déterminé par ladite valeur de paramètre de distance de transmission incrémentiel.
